# EUROPEAN PATENT APPLICATION

(11) **EP 4 671 947 A1**
(43) Date of publication of application: **31.12.2025**
(21) Application number: 24759534.1
(22) Date of filing: 05.02.2024
(51) Int. Cl.: G06F 3/0486, G06F 3/0481

(54) **INTERFACE INTERACTION METHOD AND APPARATUS, DEVICE AND STORAGE MEDIUM**

(30) Priority: 23.02.2023 CN 202310193953
(71) Applicant: Beijing Zitiao Network Technology Co., Ltd., Beijing 100190 (CN)
(72) Inventor: YAO, Yuan, Beijing 100028 (CN); WANG, Jing, Beijing 100028 (CN); XU, Feifan, Beijing 100028 (CN)
(74) Representative: Isarpatent
(86) International application number: PCT/CN2024/075884
(87) International publication number: WO 2024/174857

(57) **Abstract**

Embodiments of the present disclosure provide an interface interaction method and apparatus, a device and a storage medium. The method comprises: receiving a drag interaction operation, a drag object of the drag interaction operation being presented on a displayed interactive interface; when there is an effective drag response strategy in a pre-constructed drag response strategy set relative to the drag interaction operation, executing a response logic in the effective drag response strategy and obtaining an execution result, wherein drag response strategies in the drag response strategy set are orthogonal to each other; and when the execution result is determined to be effective, displaying on the interactive interface a drag interaction result relative to the drag object.

## Description

### CROSS-REFERENCE TO RELATED APPLICATIONS

The present application claims priority to and is based on a Chinese application with an application number 202310193953.3 and a filing date of February 23, 2023, the aforementioned application is hereby incorporated by reference in its entirety.

### FIELD OF THE INVENTION

The present disclosure relates to the field of computer application technology, and in particular, to an interface interaction method, apparatus, device, and storage medium.

### BACKGROUND

With the development of computer technology, computer software tools (such as special effects or interface design tools, etc.) are becoming more and more powerful in terms of functionality, which in turn increases the user's interactive needs when the user operates computer software tools, as a result, more and more interactive manners for interacting with computer software tool interfaces have emerged.

Generally, a drag-and-drop function, as a very important interaction manner in computer software tools, has a wide range of applications, and the response logic corresponding to the drag-and-drop interaction has become more and more complex.

### DISCLOSURE OF THE INVENTION

The present disclosure provides an interface interaction method, apparatus, device and storage medium to achieve effective response to drag-and-drop interaction operations involved in the interface.

In a first aspect, an embodiment of the present disclosure provides an interface interaction method, the interface interaction method including:
receiving a drag-and-drop interaction operation, wherein a drag-and-drop object of the drag-and-drop interaction operation is presented on a displayed interactive interface;
when there is a valid drag-and-drop response strategy in a pre-constructed drag-and-drop response strategy set for the drag-and-drop interaction operation, executing a response logic in the valid drag-and-drop response strategy and obtaining an execution result, wherein the drag-and-drop response strategies in the drag-and-drop response strategy set are orthogonal to each other;
when the execution result is valid, displaying the drag-and-drop interaction result with respect to the drag-and-drop object on the interactive interface.

In a second aspect, an embodiment of the present disclosure further provides an interface interaction apparatus, the interface interaction apparatus including:
a receiving module, configured to receive a drag-and-drop interaction operation, wherein a drag-and-drop object of the drag-and-drop interaction operation is presented on a displayed interactive interface;
an execution module, configured to, when there is a valid drag-and-drop response strategy in a pre-constructed drag-and-drop response strategy set for the drag-and-drop interaction operation, execute a response logic in the valid drag-and-drop response strategy and obtain an execution result, wherein the drag-and-drop response strategies in the drag-and-drop response strategy set are orthogonal to each other;
a display module, configured to, when the execution result is valid, display the drag-and-drop interaction result with respect to the drag-and-drop object on the interactive interface.

In a third aspect of the present disclosure, an embodiment of the present disclosure provides an electronic device including one or more processors and a memory for storing one or more programs, wherein the one or more programs, when executed by the one or more processors, cause the one or more processors to perform the interface interaction method as described in any embodiment of the present disclosure.

In a fourth aspect of the present disclosure, an embodiment of the present disclosure provides a storage medium which stores computer executable instructions, wherein the computer executable instructions, when executed by a computer processor, cause implementation of the interface interaction method as described in any embodiment of the present disclosure.

In a fifth aspect of the present disclosure, an embodiment of the present disclosure provides a computer program product comprising instructions which, when executed by a processor, causes implementation of the interface interaction method as described in any embodiment of the present disclosure.

In a sixth aspect of the present disclosure, an embodiment of the present disclosure provides a computer program comprising program codes which, when executed by a processor, cause implementation of the interface interaction method as described in any embodiment of the present disclosure.

### DESCRIPTION OF THE DRAWINGS

The above and other features, advantages and aspects of various embodiments of the present disclosure will become more apparent when taken in conjunction with the drawings and with reference to the following detailed description. Throughout the drawings, the same or similar reference numbers refer to the same or similar elements. It should be understood that the drawings are schematic and that the components and elements are not necessarily drawn to scale. In the drawings:
FIG. 1 is a schematic diagram of a flow chart of an interface interaction method provided by an embodiment of the present disclosure;
FIG. 1a is a schematic flowchart effect diagram of an interface interaction method provided by an embodiment of the present disclosure;
FIG.2 is a schematic structural diagram of an interface interaction device provided by an embodiment of the present disclosure;
FIG.3 is a schematic structural diagram of an electronic device provided by an embodiment of the present disclosure.

### DETAILED DESCRIPTION OF PREFERRED EMBODIMENTS

Embodiments of the present disclosure will be described in more detail below with reference to the accompanying drawings. Although some embodiments of the present disclosure are shown in the drawings, it should be understood that the present disclosure can be embodied in various forms and should not be construed as being limited to the embodiments set forth here, but rather, these embodiments are provided for a more thorough and complete understanding of the present disclosure. It should be understood that the drawings and embodiments of the present disclosure are only used for illustrative purposes, and are not used to limit the protection scope of the present disclosure.

It should be understood that the steps described in the method embodiments of the present disclosure may be performed in a different order and/or in parallel. Furthermore, method embodiments may include additional steps and/or omit performing the illustrated steps. The scope of the present disclosure is not limited in this respect.

As used herein, the term "including" and its variants are open-ended including, that is, "including but not limited to". The term "based on" is "at least partially based on"; the term "one embodiment" means "at least one embodiment"; the term "another embodiment" means "at least one other embodiment"; the term "some embodiments" means "at least some embodiments". Related definitions of other terms will be given in the following description.

It should be noted that the concepts of "first" and "second" mentioned in the present disclosure are only used to distinguish different devices, modules or units, and are not used to limit the order or interdependence of the functions performed by these devices, modules or units.

It should be noted that the modifications of "a" and "a plurality" mentioned in the present disclosure are schematic rather than limiting, and those skilled in the art should understand that unless the context clearly indicates otherwise, they should be understood as "one or more".

Names of messages or information exchanged among multiple devices in the embodiments of the present disclosure are only used for illustrative purposes, and are not used to limit the scope of these messages or information.

It may be understood that before using the technical solutions disclosed in the embodiments of the present disclosure, a user should be informed of the type, range of usage, usage scenario, etc. of personal information involved in the present disclosure in an appropriate manner in accordance with relevant laws and regulations, and the authorization of the user should be obtained.

For example, in response to receiving an active request from a user, prompt information is sent to the user to clearly inform the user that the operation requested to be performed will require access to and usage of the user's personal information. In this way, the user may independently choose whether to provide the personal information to software or hardware such as an electronic device, an application, a server, or a storage medium that performs the operation of the technical solution of the present disclosure according to the prompt information.

As an optional but non-limiting implementation, in response to receiving an active request from the user, the prompt information may be sent to the user in the form of a pop-up window, for example, and the prompt information may be presented in text in the pop-up window. In addition, the pop-up window may further include a selection control for the user to choose whether to "agree" or "disagree" to provide the personal information to the electronic device.

It may be understood that the above process of notifying and acquiring the authorization from the user is merely illustrative and is not intended to limit the implementations of the present disclosure. Other manners that satisfy the requirements of relevant laws and regulations may also be applied to the implementations of the present disclosure.

In addition, it may be understood that the data involved in the technical solution (including but not limited to the data itself, the acquisition of the data, or the usage of the data) should comply with the requirements of corresponding laws, regulations, and related provisions.

It should be noted that an application scenario of an embodiment of the present disclosure can be described as: a computer software tool with an interactive interface (such as a special effect production tool, etc.), and accordingly, the interactive interface can be a scene production interface, a special effect production interface, etc. Generally, an interactive interface includes controls, operation panels, and view panels that display information in a tree structure, etc., which are required for operation of a computer software tool. During the operation of a computer software tool, the operator of the computer software tool may generate an interaction operation with the interactive interface through input forms such as mouse, touch, shortcut keys, etc., and a drag-and-drop interaction operation may be regarded as one of the interactive forms.

Generally, a drag-and-drop function, as a very important interaction manner in computer software tools, has a wide range of applications, and the response logic corresponding to the drag-and-drop interaction has become more and more complex. For example, in a production-type computer software tool, when an operator drag-and-drops different objects within a module on the software tool interface, different rendering results need to be displayed for different drag-and-drop objects after responding to the drag-and-drop operation; in addition, when the software tool responds to the drag-and-drop operation, different drag-and-drop feedbacks need to be generated for different drag-and-drop situations.

Currently, most computer software tools adopt traditional design ideas of a user interface architecture to carry out the architectural design of an interactive interface, however, the interactive interface formed by the traditional design ideas cannot effectively respond to complex drag-and-drop interactive functions, has response shortcomings and limitations, and is not conducive to later maintenance and version iteration of computer software tools. For example, with respect to different interaction branches, the implementation of execution logics that needs to be implemented must be limited in a specified module. For another example, with respect to multiple complex interaction branches, there may be coupling between the execution logics, which will lead to poor maintainability in the later stage and poor scalability during version iteration.

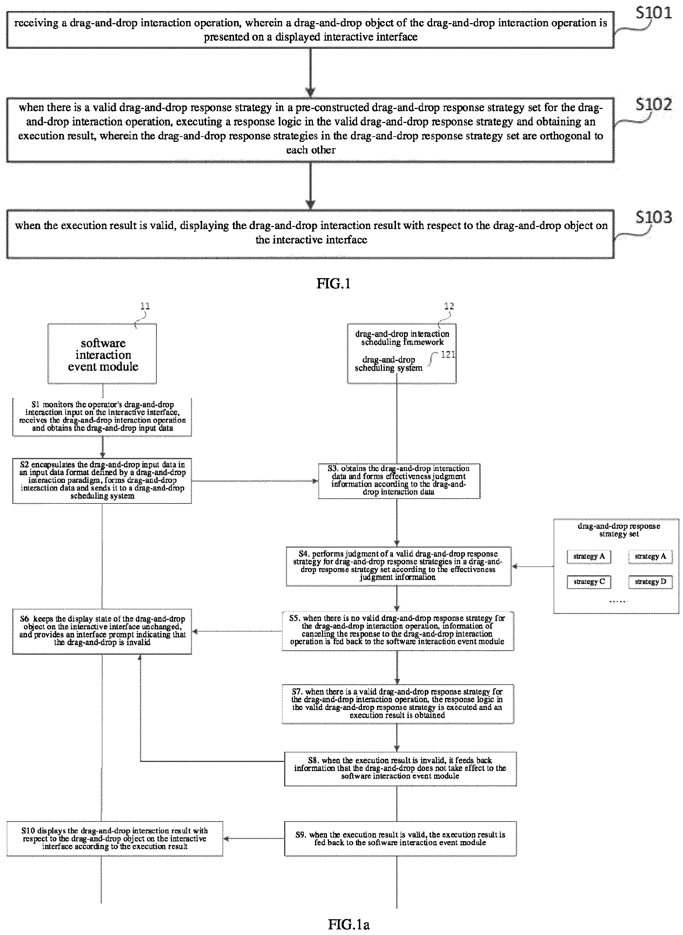

Based on this, the embodiment provides an interface interaction method. FIG. 1 shows a schematic diagram of a flow chart of an interface interaction method provided by an embodiment of the present disclosure. The embodiment of the present disclosure is applicable to a case of performing drag-and-drop interaction operations on an interface of a computer software tool, the method can be executed by an interface interaction apparatus, which can be integrated in a computer software tool, the computer software tool can be implemented in the form of software and/or hardware, optionally, the computer software tool can be integrated in an electronic device and implemented by the electronic device, the electronic device is preferably a desktop computer, a tablet computer, a laptop computer, a server, etc.

As shown in FIG.1, the interface interaction method of an embodiment of the present disclosure may specifically include:
S101: receiving a drag-and-drop interaction operation, wherein a drag-and-drop object of the drag-and-drop interaction operation is presented on a displayed interactive interface.

In this embodiment, the interactive interface may be an interface with an interactive control/component presented on a running computer software tool, and the computer software tool is configured in a subject (electronic device) for executing the method provided in this embodiment. The drag-and-drop object may be a control or component presented in any functional module on the interactive interface, or the like.

Taking a special effect production tool as an example, the interactive interface may be a special effect production interface, which may include a special effect production panel, a production preview display panel, and may further include a navigation tree view panel. The navigation tree displayed in the navigation tree view panel can be constructed based on relevant information of the component data involved in the special effect production.

Illustratively, the displayed navigation tree may include multiple root component collection nodes, and each root component collection node may also include a sub-component collection node. Among them, each root component collection node can be presented in the navigation tree view panel in a certain rendering order. Continuing with the above description, each node under the navigation tree presented in the navigation tree view panel can be regarded as an interactive control or interactive component, for example, the items in a menu bar, a function panel bar, etc. presented in the production panel can also be regarded as interactive controls or interactive components.

In this embodiment, the drag-and-drop object may be any information content presented in the interactive interface, and the drag-and-drop interaction operation may be considered as an interaction operation generated by an operator performing a certain drag-and-drop behavior on the drag-and-drop object. This step may generate a drag-and-drop interaction operation upon receiving the drag-and-drop object suffering from a certain dragging behavior of.

For example, still taking the special effect production interface as an example, the drag-and-drop object can be any node (root component node or subcomponent node) in the navigation tree view panel, and the drag-and-drop interaction operation can be an interaction operation generated when a drag-and-drop object is selected and dragged-and-dropped to a blank space below, or it can be an interaction operation generated when a drag-and-drop object is selected and dragged-and-dropped to a middle position between two root component nodes.

It should be noted that the drag-and-drop interaction operation may have multiple drag-and-drop objects or corresponding drag behaviors, in a conventional framework design of a computer software tool, as long as a drag-and-drop interaction operation is received, a response will be given for the drag-and-drop interaction operation, but the presented response result may not meet the drag function requirements of the computer software tool.

S102. when there is a valid drag-and-drop response strategy in a pre-constructed drag-and-drop response strategy set for the drag-and-drop interaction operation, executing a response logic in the valid drag-and-drop response strategy and obtaining an execution result, wherein the drag-and-drop response strategies in the drag-and-drop response strategy set are orthogonal to each other.

In this embodiment, after the drag-and-drop interaction operation is received in the above steps, the response manner for the drag-and-drop interaction operation is different from the existing conventional response manner. This embodiment pre-constructs a drag-and-drop response strategy set, the drag-and-drop response strategy set includes at least one drag-and-drop response strategy, which is equivalent to pre-constructing matching drag-and-drop response strategies for various drag-and-drop interaction operations that may be triggered.

Each drag-and-drop response strategy may include two parts, one part is a strategy effectiveness judgment logic which is used for matching for a drag-and-drop interaction operation, and the other part is a drag-and-drop response logic required for responding to the drag-and-drop interaction operation after the strategy takes effect. Meanwhile, in order to ensure that there is a unique drag-and-drop response logic that can provide a respondence for a drag-and-drop interaction operation, this embodiment must ensure that different drag-and-drop response strategies are mutually orthogonal when constructing the drag-and-drop response strategies are. In a preferred implementation, the mutual orthogonality between different drag-and-drop response strategies can specifically be that the strategy effectiveness judgment logics included in different drag-and-drop response strategies are mutually orthogonal to each other; further, it can also be defined that the drag-and-drop response logics included in the drag-and-drop response strategies are also mutually orthogonal to each other.

Continuing with the above description, the mutual orthogonality can be understood as the judgment conditions corresponding to the strategy effectiveness judgment logics in different drag-and-drop response strategies are all different from one another, on this basis, it can also be defined that execution contents of the corresponding drag-and-drop response logics in different drag-and-drop response strategies are also different from one another, in this way, the decoupling between the drag-and-drop response strategies corresponding to different drag-and-drop interaction operations can be achieved. Through the above design in this embodiment, mutual restrictions between different drag-and-drop interaction operations can be avoided, and the problem of shortcomings and limitations existing in the existing drag-and-drop interaction can be solved, which is also more convenient for later maintenance and version iteration of computer software tools.

It can be known that, before responding to the received drag-and-drop response strategy, this step needs to determine whether there is a matching valid drag-and-drop response strategy in the drag-and-drop response strategy set. In one implementation, relevant drag-and-drop interaction operation information contained in the received drag-and-drop interaction operation can be analyzed from the received drag-and-drop interaction operation, and based on the drag-and-drop interaction operation information and in conjunction with the strategy effectiveness judgment logic, it can be determined whether there is a drag-and-drop response strategy in the drag-and-drop response strategy set that matches the received drag-and-drop interaction operation, if so, it can be considered that there is a valid drag-and-drop response strategy for the drag-and-drop interaction operation.

When there is a valid drag-and-drop response strategy in the drag-and-drop response strategy set for the drag-and-drop interaction operation, this step can execute the response logic in the valid drag-and-drop response strategy to respond to the drag-and-drop interaction operation, and a corresponding execution result can be obtained after the response logic is executed. The execution result may include return value information indicating whether the response execution takes effect, and may also include component updating related information used for component updating and/or interface rendering related information used for interface rendering after the interactive interface responds to the drag-and-drop interaction operation at the visual level.

S103: when the execution result is valid, displaying the drag-and-drop interaction result with respect to the drag-and-drop object on the interactive interface.

It can be known that the execution result after responding to the drag-and-drop interaction operation will eventually be presented on the interactive interface, this embodiment defines the condition for presenting the execution result on the interactive interface as a condition that the execution result as determined above is a valid execution result, and after determining that the execution result is valid, this step can render the drag-and-drop interaction result for the dragged-and-dropped object on the interactive interface based on relevant information in the execution result.

Exemplarily, when the drag-and-drop interaction operation is represented by a behavior of dragging-and-dropping any component node in the navigation tree view panel downward to a blank space, after determining through the above steps of this embodiment that there is a valid drag-and-drop response strategy for the drag-and-drop interaction operation, and executing the response logic in the valid drag-and-drop response strategy to obtain the execution result, if the execution result is a valid execution result, then after rendering through the relevant information for interface/component rendering contained in the execution result, the drag-and-drop interaction result that can finally be displayed on the interactive interface is that the root component node is located at the end position in the navigation tree view panel, that is, the presentation position of the root component node in the navigation tree view panel is at the bottom of all the presented nodes.

An interface interaction method provided by an embodiment of the present disclosure is equivalent to adding a set of drag-and-drop response strategies corresponding to different drag-and-drop interaction operations in a computer software tool that provides interface interaction, so as to perform the determination of a valid drag-and-drop response strategy after receiving a drag-and-drop interaction operation, and respond to the drag-and-drop interaction operation only when it is determined that there is a valid drag-and-drop response strategy, and only when the execution result after the responding is determined to be valid, the execution result is rendered on the interactive interface to realize the display of the drag-and-drop interaction result. Compared with the interface interaction implementation under the traditional user interface framework design, the present method carries out a mutually orthogonal decoupling design for the drag-and-drop response strategies corresponding to respective drag-and-drop interaction operations, adds the effectiveness judgment for the drag-and-drop interaction operations, and ensures that there is a unique drag-and-drop response strategy for each valid drag-and-drop interaction operation, which effectively avoids the shortcomings and limitations in the existing implementation of complex drag functions, expands the executable forms of drag-and-drop interaction operations, and realizes effective response of drag-and-drop interaction operations. Meanwhile, the present technical solution constructs a drag-and-drop response strategy set design in a mutually orthogonal form, realizes the unification and standardization of the drag-and-drop interaction operation response forms, and is more conducive to functional maintenance and version iteration of the subsequent computer software tools.

It should be noted that the interface interaction method provided in this embodiment is, at underlying level, equivalent to designing a drag-and-drop interaction scheduling framework with a unified interface to the outside world, under the drag-and-drop interaction scheduling framework, a drag-and-drop response strategy set can be pre-constructed, the drag-and-drop response strategy set can be regarded as a container object that collects instances of various drag-and-drop response strategies required for the operation of computer software tools.

In this embodiment, it can be considered that each drag-and-drop response strategy in the drag-and-drop response strategy set describes strategy information according to a preset drag-and-drop interaction paradigm, for example, each drag-and-drop response strategy includes an initialization interface, a effectiveness judgment interface, a response logic execution interface, etc. that are normalized by the drag-and-drop interaction paradigm, and each interface has a unified input and output data structure.

Continuing with the above description, a respective drag-and-drop response strategy only matches one type of drag-and-drop interaction operation, this embodiment can call a drag-and-drop response strategy set through a unified interface based on drag-and-drop input data involved an the drag-and-drop interaction operation, and perform judgment for the drag-and-drop interaction operation and each drag-and-drop response strategy by accessing the effectiveness judgment interface in each drag-and-drop response strategy, so as to determine whether there is a valid drag-and-drop response strategy for the drag-and-drop interaction operation, and then when there is a valid drag-and-drop response strategy, the drag-and-drop interaction operation is considered to be a valid drag-and-drop interaction operation that can be responded to.

As a first alternative embodiment in the embodiments of the present disclosure, based on the above embodiment, the above interface interaction method can be further optimized, and specifically can further include the following execution steps:
a1) obtaining drag-and-drop interaction data determined from the drag-and-drop interaction operation, and forming effective judgment information according to the drag-and-drop interaction data.

Continuing with the above description, the execution step added by the first alternative embodiment of the present disclosure may be executed after the drag-and-drop interaction operation is received, so as to perform judgment for a valid drag-and-drop response strategy. In this embodiment, the drag-and-drop interaction data can be understood as drag-and-drop input data that is generated correspondingly while a drag-and-drop interaction operation is generated after a drag-and-crop behavior is applied to an drag-and-drop object on an interactive interface, the drag-and-drop interaction data can be regarded as the drag-and-drop input data packaged in a certain standardized data format.

It should be noted that the generated drag-and-drop interaction operation can be initially received by a software interactional event function module on a computer software tool, and the drag-and-drop input data of the drag-and-drop interaction operation can be received concurrently, thereafter, the function module can encapsulate the drag-and-drop input data according to a uniformly defined input data format to obtain the drag-and-drop interaction data, so that the above-mentioned framework for drag-and-drop interaction scheduling can acquire the drag-and-drop interaction data through a unified interface.

As an implementation manner, the drag-and-drop interaction data may be determined as follows: extracting the drag-and-drop input data corresponding to the drag-and-drop interaction operation; encapsulating the drag-and-drop input data according to an input data format defined by a preset drag-and-drop interaction paradigm to form the drag-and-drop interaction data.

In this embodiment, the software interaction event function module on the computer software tool can perform the drag-and-drop input data extraction for the received drag-and-drop interaction operation to obtain key information contained in the drag-and-drop input data, next, the extracted drag-and-drop input data can be encapsulated in accordance with the definition of the input data format in the pre-set drag-and-drop interaction paradigm to form drag-and-drop interaction data that meets the input data format.

The above-mentioned conversion of drag-and-drop input data to drag-and-drop interaction data realizes the standardization and unification of data formats in interface interaction, and ensures the accuracy and effectiveness in the execution of subsequent interface interaction methods.

The execution object of the above steps of the first alternative embodiment of the present disclosure can be considered as a drag-and-drop interaction scheduling framework, which is designed and integrated in the running computer software tool. The drag-and-drop interaction data obtained in this step can be considered as only data encapsulated in a unified input data format, which may include drag-and-drop object related data, drag behavior related data, etc. of the drag-and-drop interaction operation. This step can also generate effectiveness judgment information that can be used for drag-and-drop response strategy matching, by analyzing the drag-and-drop interaction data.

Among them, based on the drag-and-drop object related data in the drag-and-drop interaction data, it can be known the number of drag-and-drop objects that the drag-and-drop interaction operation acts on, the position in the interactive interface where each drag-and-drop object is located, etc., and through the drag-and-drop behavior related data, it can be known what kind of drag-and-drop behavior is performed on the drag-and-drop object. This step may form effectiveness judgment information based on the above analyzed information, and the effectiveness judgment information may include the number, locations, and the kind of dragging behavior that has been performed on, etc. of drag-and-drop objects.

b1) determining a valid drag-and-drop response strategy from the drag-and-drop response strategy set according to the effectiveness judgment information.

In this embodiment, the drag-and-drop response strategy set includes multiple pre-constructed drag-and-drop response strategies, each drag-and-drop response strategy includes a response effectiveness judgment logic with a different determination condition, through the response effectiveness judgment logic, it can be judged whether there is a valid drag-and-drop response strategy for the drag-and-drop interaction operation. if it is determined through the judgment that there is a valid drag-and-drop response strategy for the drag-and-drop interaction operation, then the drag-and-drop interaction operation can be considered to be a valid drag-and-drop interaction operation, which is equivalent to that a subsequent response logic related to the drag-and-drop can continue to execute.

As one implementation manner, the step of performing the judgment of a valid drag-and-drop response strategy may include:
b11) acquiring a drag-and-drop response strategy included in the drag-and-drop response strategy set, wherein the drag-and-drop response strategy includes a response effectiveness judgment logic defined according to a preset drag-and-drop interaction paradigm.

This step can directly acquire all the drag-and-drop response strategies contained in the pre-constructed drag-and-drop response strategy set, wherein the number of drag-and-drop response strategies contained in the drag-and-drop response strategy set and the corresponding response effectiveness judgment logics can be dynamically updated, in the later maintenance or version iteration stage of the computer software tool, a new drag-and-drop response strategy can be added according to an actual drag-and-drop function requirement.

It can be understood that this embodiment conforms to the design specifications of the drag-and-drop interaction framework, where each drag-and-drop response strategy in the drag-and-drop response strategy set needs to be constructed based on the relevant definitions in the preset drag-and-drop interaction paradigm, and the response effectiveness judgment logic, which is a relatively critical part in the drag-and-drop response strategy, is also designed in accordance with the definitions in the drag-and-drop interaction paradigm.

In this embodiment, the response effectiveness judgment logic may include an execution trigger condition under which the drag-and-drop interaction operation is to execute a response logic in the drag-and-drop response strategy, such as whether there are three drag-and-drop objects, whether each drag-and-drop object is in the same sub-scene produced, and whether the drag-and-drop behavior performed on the drag-and-drop object is to drag-and-drop to the blank space below, etc.

b12) operating the response effectiveness judgment logic by using the effectiveness judgment information as input data of the response effectiveness judgment logic, and acquire an operation return value of the response effectiveness judgment logic.

In this embodiment, the effectiveness judgment information can be used as input data to sequentially operate the response effectiveness judgment logic in each drag-and-drop response strategy, and the operation return value of each effectiveness judgment logic can be obtained. Exemplarily, the operation return value obtained in this step can be a tag value indicating whether the response takes effect, and the tag value can preferably be set to '0' or '1'.

b13) judging whether there is a target operation return value that satisfies a response valid tag value. If so, execute step b14); if not, execute step b15).

In this embodiment, the operation return value obtained above can be compared with the pre-set response valid tag value, and it can be determined whether there is an operation return value that matches the response valid tag value, based on the comparison result, if so, it can be considered that the target operation return value exists, and the operation of step b14) can be continued; if not, it can be considered that the target operation return value does not exist, and the operation of step b15) can be executed.

Exemplarily, continuing with the above description, in this embodiment, if the response valid tag value is set to '1', this step can perform searching with respect to each operation return value obtained above, to determine whether there is a case where the operation return value is '1'. If so, it is considered that there is a target operation return value that meets the condition; otherwise, there is no target operation return value.

It can be known that when this step determines that there is a target operation return value, according to the design specifications of this embodiment, there can be only one target operation return value among multiple operation return values.

b14) determining a drag-and-drop response strategy corresponding to the target operation return value as the valid drag-and-drop response strategy.

This step is executed when the above judgment is "yes", and can determine the drag-and-drop response strategy corresponding to the target operation return value as the valid drag-and-drop response strategy corresponding to the drag-and-drop interaction operation.

b15) determine that there is no valid drag-and-drop response strategy in the drag-and-drop response strategy set.

This step is executed when the above judgment is "no", and it can be determined that there is no valid drag-and-drop response strategy for the drag-and-drop interaction operation in the drag-and-drop response strategy set, and it can be considered that the drag-and-drop interaction operation is not a valid drag-and-drop interaction operation.

It should be noted that in the above-mentioned implementation of the valid drag-and-drop response strategy, the effectiveness judgment information can be first combined with the response effectiveness judgment logic of each drag-and-drop response strategy to obtain its respective operation return value; then, each operation return value is compared with the response valid tag value in a unified way, to determine whether there is a target operation return value. Another implementation is to combine the effectiveness judgment information with a drag-and-drop response strategy, and directly compare the obtained operation return value with the response valid tag value. If the two match, it can be directly considered that there is a valid drag-and-drop response strategy for the drag-and-drop interaction operation, and the judgment of the valid drag-and-drop response strategy can be ended, and there is no need to perform judgment for other drag-and-drop response strategies; otherwise, select another drag-and-drop response strategy to repeat the above judgment, if the last drag-and-drop response strategy does not match the response valid tag value, it can be considered that there is no valid drag-and-drop response strategy for the drag-and-drop interaction operation in the drag-and-drop response strategy set.

The above-mentioned judgment implementation of the valid drag-and-drop response strategy in this embodiment is equivalent to a process of searching an executable drag-and-drop response strategy for a drag-and-drop interaction operation. The unified specifications for each drag-and-drop response strategy and the unified specifications for input data in the above-mentioned implementation are conducive to the global execution of drag-and-drop interaction scheduling, and can better ensure later maintainability and iteratability of the drag-and-drop interaction operation running on the interface interaction function.

The interface interaction method provided in the above first alternative embodiment of the present disclosure adds an execution step of performing effectiveness judgment for a drag-and-drop interaction operation, unlike the existing interaction implementation that unconditionally responds to various drag-and-drop operations, the above technical scheme of the embodiment implements standardized constraints on the drag-and-drop interaction operations, so as to only respond to the selected valid drag-and-drop interaction operation, thereby ensuring the effectiveness of the drag-and-drop interaction and being more conducive to provide a user experience of the interface interaction. Meanwhile, it provides underlying data support for the subsequent maintainability and iteratability of drag-and-drop interactions.

As a second alternative embodiment in embodiments of the present disclosure, on the basis of the above embodiment, the above interface interaction method can be further optimized, and specifically the following steps can be performed: when there is no valid drag-and-drop response strategy in the drag-and-drop response strategy set for the drag-and-drop interaction operation, canceling response to the drag-and-drop interaction operation, keeping a display state of the drag-and-drop object in the interactive interface unchanged, and/or displaying an interface prompt that the drag-and-drop interaction operation is invalid.

The second alternative embodiment of the present disclosure specifically provides a specific implementation when it is judged that there is no valid drag-and-drop response strategy for the drag-and-drop interaction operation. Specifically, if it is judged that there is no valid drag-and-drop response strategy, the received drag-and-drop interaction operation can be considered as an invalid drag-and-drop interaction operation, at this time, the response to the drag-and-drop interaction operation can be directly canceled through the steps provided in the second alternative embodiment of the present disclosure, and at the visualization level, the display state of the selected drag-and-drop object does not change with the movement of the generated drag-and-drop behavior, at this time, the display state of the drag-and-drop object will be kept unchanged. Furthermore, at the visualization level, an interface prompt indicating that the received drag-and-drop interaction operation is an invalid operation may be displayed.

Exemplarily, taking a special effect production interface as an interactive interface, a navigation tree view panel is presented on the production interface, and multiple root component nodes and their corresponding sub-component nodes are displayed in the navigation tree view panel, if a drag-and-drop object of a drag-and-drop interaction operation is one of the root component nodes and a sub-component node under another root component node, and the drag-and-drop behavior is manifested as dragging and dropping the drag-and-drop object to the middle of two root component nodes, then when the method provided above in this embodiment is utilized to perform judgment of a valid drag-and-drop response strategy, a judgment result, that there is no valid drag-and-drop response strategy for the drag-and-drop interaction operation, can be obtained.

Continuing with the above description, when there is no valid drag-and-drop response strategy for the drag-and-drop interaction operation, the drag-and-drop interaction operation can be considered as an invalid drag-and-drop interaction operation, and any subsequent response to the drag-and-drop interaction operation can be canceled, the visual display effect is that the display position of each selected drag-and-drop object (which may include a root component node and multiple sub-component nodes under another root component node) does not change with the dragging behavior. Meanwhile, an interface prompt can be given for the invalid drag-and-drop interaction operation, such as popping up a window to show that the drag-and-drop interaction operation is invalid, so as to provide an interface prompt; or, a drag cursor acting on the drag-and-drop object can be directly grayed out to provide an interface prompt that no response to the drag-and-drop interaction operation is performed.

The second alternative embodiment of the present disclosure serves as an optimization of the interface interaction method provided by the embodiment, and provides a specific implementation when the drag-and-drop interaction operation is an invalid drag-and-drop interaction operation, thereby better improving the execution logic of the interface interaction, unlike the existing interface interaction implementation in which a response would be given as long as a drag-and-drop operation is performed and it is not determined whether the drag-and-drop interaction operation is suitable for a response, the technical solution of the second alternative embodiment of the present disclosure is more conducive to a valid response to the drag-and-drop interaction operation in the interface interaction.

As a third alternative embodiment in the embodiments of the present disclosure, on the basis of the above embodiments, the above interface interaction method can be further optimized, and specifically the following steps can be performed: when it is judged that the execution result is invalid, the display state of the drag-and-drop object in the interactive interface remains unchanged, and/or, an interface prompt indicating that the execution result of the drag-and-drop interaction operation is invalid is displayed.

The third alternative embodiment of the present disclosure specifically provides a specific implementation when it is judged that a valid drag-and-drop response strategy exists for the drag-and-drop interaction operation, but the execution result after executing the response logic is invalid. Specifically, after it is judged that there is a valid drag-and-drop response strategy and the response logic in the valid drag-and-drop response strategy has been executed, the obtained execution result may be valid or invalid. When the execution result is invalid, it can be considered that an operation error occurred during the execution of the response logic, at this time, although the execution of the response logic is completed, due to the invalid execution result, the display state of the selected drag-and-drop object presented at the visualization level does not change with the movement of the generated drag-and-drop behavior, this step will still keep the display state of the drag-and-drop object in the interactive interface unchanged. Furthermore, at the visualization level, an interface prompt indicating that the execution result after the received drag-and-drop interaction operation is responded to is invalid can be displayed.

Exemplarily, still taking the special effect production interface as an interactive interface as an example, multiple root component nodes and their corresponding sub-component nodes are displayed in the navigation tree view panel presented in the production interface, if the drag-and-drop object of the drag-and-drop interaction operation is one of the root component nodes, and the drag-and-drop behavior is manifested as dragging and dropping the drag-and-drop object to the blank space at the bottom of the navigation tree view panel, then when the judgment of an valid drag-and-drop response strategy is performed by the above method provided in this embodiment, a judgment result that there is an valid drag-and-drop response strategy for the drag-and-drop interaction operation can be obtained.

Continuing with the above description, when there is a valid drag-and-drop response strategy for the drag-and-drop interaction operation, the drag-and-drop interaction operation itself can be considered as a valid drag-and-drop interaction operation, and the drag-and-drop interaction operation can be subsequently responded to based on the response logic in the valid drag-and-drop response strategy, when the execution result of the response logic is invalid, which is equivalent to a failure to respond to the drag-and-drop interaction operation, at this time, the visual effect is that the display position of the selected drag-and-drop object (selected root component node) does not change. Correspondingly, an interface prompt can also be given for the invalid execution result that occurred after responding to the drag-and-drop interaction operation, the form of the interface prompt can also be to pop up a window to display that the execution result after responding to the drag-and-drop interaction operation is invalid; or, can also be that the drag cursor acting on the drag-and-drop object is directly grayed out, to provide an interface prompt for not rendering the invalid execution result of the drag-and-drop interaction operation response.

The third alternative embodiment of the present disclosure serves as an optimization of the interface interaction method provided above in the embodiment, and provides a specific implementation when the execution result is invalid, and also improves the execution logic of the interface interaction, the third alternative embodiment of the present disclosure can better avoid the impact of the execution result of the response failure on the interface interaction, and by means of the visual representation of the ineffective response through this presentation form, can also better improve the user experience during the interface interaction implementation process.

As a fourth alternative embodiment in embodiments of the present disclosure, based on the above embodiment, the above interface interaction method can be further optimized, and specifically the following steps can be performed:
It shall be known that the following steps of the fourth alternative embodiment of the present disclosure specifically provide a judgment implementation about whether the execution result is valid or invalid, and provide underlying data support for the effective response to the drag-and-drop interaction operation in the interface interaction.

a2) When the response to the drag-and-drop behavior event corresponding to the drag-and-drop object is completed according to the response logic, generating an execution return value representing whether the execution is normal or not to constitute an execution result.

In this embodiment, when there is a valid drag-and-drop response strategy for the drag-and-drop interaction operation, and the drag-and-drop behavior event corresponding to the drag-and-drop object on which the drag-and-drop interaction operation acts is completed according to the response logic in the valid drag-and-drop response strategy, an execution result can be generated, and the execution result includes an execution return value indicating whether the execution is normal or not. Among them, the execution return value is generated after the response to the drag-and-drop behavior event corresponding to the drag-and-drop object is completed according to the response logic.

b2) If the execution return value indicates that the execution is normal, then it is determined that the execution result is valid; otherwise, it is determined that the execution result is invalid.

This step can further determine whether the included execution return value represents that the response logic is executed normally. If so, the execution result can be considered valid; if not, the execution result can be considered invalid.

With respect to the execution result determined in the embodiment is valid or invalid, there are subsequent corresponding execution steps. It can be known that different execution steps can have different visual effects displayed at the visualization level.

In order to better understand the interface interaction method provided above in the embodiment, the embodiment gives an example illustration, FIG. 1a is an exemplary flowchart effect diagram of an interface interaction method provided by an embodiment of the present disclosure. As shown in FIG. 1a, this embodiment divides the execution object of the interface interaction method into two parts, one part is a software interaction event module 11 in the computer software tool, and the other part is a drag-and-drop interaction scheduling framework 12 designed in the computer software tool, which is specifically executed by the drag-and-drop scheduling system 121 in the drag-and-drop interaction scheduling framework 12. As shown in FIG. 1a, the implementation of the interface interaction method may specifically include the following process steps:
S1. The software interaction event module monitors the operator's drag-and-drop interaction input on the interactive interface, receives the drag-and-drop interaction operation and obtains the drag-and-drop input data.
S2. The software interaction event module encapsulates the drag-and-drop input data in an input data format defined by a drag-and-drop interaction paradigm, forms drag-and-drop interaction data and sends it to a drag-and-drop scheduling system.
S3. The drag-and-drop scheduling system obtains the drag-and-drop interaction data and forms effectiveness judgment information according to the drag-and-drop interaction data.
S4. The drag-and-drop scheduling system performs determination of a valid drag-and-drop response strategy for drag-and-drop response strategies in a drag-and-drop response strategy set according to the effectiveness judgment information.
S5. When the drag-and-drop scheduling system determines that there is no valid drag-and-drop response strategy for the drag-and-drop interaction operation, information of canceling the response to the drag-and-drop interaction operation is fed back to the software interaction event module.
S6. The software interaction event module keeps the display state of the drag-and-drop object on the interactive interface unchanged, and provides an interface prompt indicating that the drag-and-drop is invalid.
S7: When the drag-and-drop scheduling system determines that there is a valid drag-and-drop response strategy for the drag-and-drop interaction operation, the response logic in the valid drag-and-drop response strategy is executed and an execution result is obtained.
S8. When the drag-and-drop scheduling system determines that the execution result is invalid, it feeds back information that the drag-and-drop does not take effect to the software interaction event module, and returns to execute S6.
S9. When the drag-and-drop scheduling system determines that the execution result is valid, the execution result is fed back to the software interaction event module.
S10. The software interaction event module displays the drag-and-drop interaction result with respect to the drag-and-drop object on the interactive interface according to the execution result.

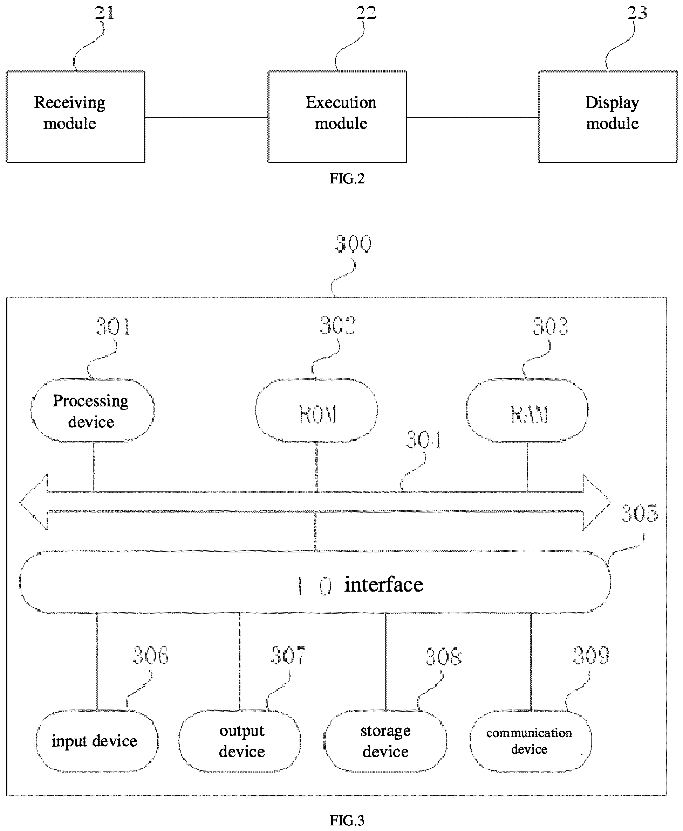

FIG. 2 is a schematic structural diagram of an interface interaction apparatus provided by an embodiment of the present disclosure. As shown in FIG. 2, the apparatus may include: a receiving module 21, an execution module 22, and a display module 23, wherein:
a receiving module 21, configured to receive a drag-and-drop interaction operation, wherein a drag-and-drop object of the drag-and-drop interaction operation is presented on a displayed interactive interface;
an execution module 22, configured to, when there is a valid drag-and-drop response strategy in a pre-constructed drag-and-drop response strategy set for the drag-and-drop interaction operation, execute a response logic in the valid drag-and-drop response strategy and obtain an execution result, wherein the drag-and-drop response strategies in the drag-and-drop response strategy set are orthogonal to each other;
a display module 23, configured to, when it is judged that the execution result is valid, display the drag-and-drop interaction result with respect to the drag-and-drop object on the interactive interface.

An interface interaction apparatus provided by an embodiment of the present disclosure is equivalent to adding a set of drag-and-drop response strategies corresponding to different drag-and-drop interaction operations in a computer software tool that provides interface interaction, so as to perform the determination of a valid drag-and-drop response strategy after receiving a drag-and-drop interaction operation, and respond to the drag-and-drop interaction operation only when it is determined that there is a valid drag-and-drop response strategy, and only when the execution result after the responding is determined to be valid, the execution result is rendered on the interactive interface to realize the display of the drag-and-drop interaction result. The present interface interaction apparatus carries out a mutually orthogonal decoupling design for the drag-and-drop response strategies corresponding to respective drag-and-drop interaction operations, adds the effectiveness judgment for the drag-and-drop interaction operations, and ensures that there is a unique drag-and-drop response strategy for each valid drag-and-drop interaction operation, which effectively avoids the shortcomings and limitations in the existing implementation of complex drag functions, expands the executable forms of drag-and-drop interaction operations, and realizes effective responses to drag-and-drop interaction operations. Meanwhile, the present technical solution constructs a drag-and-drop response strategy set design in a mutually orthogonal form, realizes unification and standardization of the forms of drag-and-drop interaction operation responses, and is more conducive to functional maintenance and version iteration of the subsequent computer software tools.

Furthermore, the apparatus may also include:
an information generation module, configured to obtain drag-and-drop interaction data determined from the drag-and-drop interaction operation, and form effectiveness judgment information according to the drag-and-drop interaction data;
an effectiveness judgment module, configured to determine a valid drag-and-drop response strategy from the drag-and-drop response strategy set according to the effectiveness judgment information.

Furthermore, the apparatus may also include: an interaction data determination module, configured to extract drag-and-drop input data corresponding to the drag-and-drop interaction operation; encapsulate the drag-and-drop input data in an input data format defined by a preset drag-and-drop interaction paradigm to form the drag-and-drop interaction data.

Furthermore, the effectiveness judgment module can be specifically configured to:
acquire a drag-and-drop response strategy included in the drag-and-drop response strategy set, wherein the drag-and-drop response strategy includes a response effectiveness judgment logic defined according to a preset drag-and-drop interaction paradigm;
operate the response effectiveness judgment logic by using the effectiveness judgment information as input data of the response effectiveness judgment logic, and acquire an operation return value of the response effectiveness judgment logic;
if there is a target operation return value that satisfies a response valid tag value, then determine a drag-and-drop response strategy corresponding to the target operation return value as the valid drag-and-drop response strategy, otherwise, determine there is no valid drag-and-drop response strategy in the drag-and-drop response strategy set.

Furthermore, the apparatus may also include a first invalid processing module, which can be configured to:
when there is no valid drag-and-drop response strategy in the drag-and-drop response strategy set for the drag-and-drop interaction operation, canceling response to the drag-and-drop interaction operation, keep a display state of the drag-and-drop object in the interactive interface unchanged, and/or display an interface prompt indicating that the drag-and-drop interaction operation is invalid.

Furthermore, the apparatus may also include a second invalid processing module, which may be configured to:
When it is judged that the execution result is invalid, keep the display state of the drag-and-drop object on the interactive interface unchanged, and/or display an interface prompt indicating that the execution result of the drag-and-drop interaction operation is invalid.

Furthermore, the apparatus may also include:
a value generation module, configured to, when the response to the drag-and-drop behavior event corresponding to the drag-and-drop object is completed according to the response logic, generate an execution return value representing whether the execution is normal or not, to constitute an execution result;
a result effectiveness judgment module, configured to determine that the execution result is valid if the execution return value indicates that the execution is normal; otherwise, determine that the execution result is invalid;
wherein, the execution return value is generated after the response to the drag-and-drop behavior event corresponding to the drag-and-drop object is completed according to the response logic.

The interface interaction apparatus provided in the embodiments of the present disclosure can execute the interface interaction method provided in any embodiment of the present disclosure, and has the corresponding functional modules and can achieve beneficial effects of the method.

It is worth noting that the various units and modules included in the above-mentioned apparatus are only divided according to functional logics, but are not limited to the above-mentioned division, as long as the corresponding functions can be achieved; in addition, the specific names of the functional units are only for the convenience of distinguishing each other, and are not used to limit the protection scopes of the embodiments of the present disclosure.

FIG. 3 illustrates a structural schematic diagram of an electronic device provided by an embodiment of the present disclosure. Hereinafter reference will be made with reference to FIG. 3, which illustrates a structural schematic diagram of an electronic device (such as a terminal device or a server in FIG. 3) 300 suitable for implementing the embodiments of the present disclosure. The electronic devices in the embodiments of the present disclosure may include, but are not limited to, mobile terminals such as mobile phones, notebook computers, digital broadcast receivers, PDA (Personal Digital Assistant), PAD (Tablet Computer), PMP (Portable Multimedia Player), vehicle-mounted terminals (such as vehicle-mounted navigation terminals), and fixed terminals such as digital TV and desktop computers. The electronic device shown in FIG. 3 is only an example, and should not bring any limitation to the functions and application scopes of the embodiments of the present disclosure.

As shown in FIG. 3, an electronic device 300 may include a processing device (such as a central processing unit, a graphics processor, etc.) 301, which may perform various appropriate actions and processes according to a program stored in a read-only memory (ROM) 302 or a program loaded from a storage device 308 into a random-access memory (RAM) 303. In the RAM 303, various programs and data required for the operation of electronic device 300 are also stored. A processing device 301, a ROM 302 and a RAM 303 are connected to each other through a bus 304. An input/output (I/O) interface 305 is also connected to the bus 304.

Generally, the following devices can be connected to the I/O interface 305: an input device 306 including, for example, a touch screen, a touch pad, a keyboard, a mouse, a camera, a microphone, an accelerometer, a gyroscope, etc.; an output device 307 including, for example, a liquid crystal display (LCD), a speaker, a vibrator, etc.; a storage device 308 including, for example, a magnetic tape, a hard disk, etc.; and a communication device 309. The communication device 309 may allow the electronic device 300 to communicate wirelessly or wired with other devices to exchange data. Although FIG. 3 shows an electronic device 300 with various devices, it should be understood that it is not required to implement or have all the devices as shown. More or fewer devices may alternatively be implemented or provided.

In particular, according to embodiments of the present disclosure, the processes described above with reference to the flowcharts can be implemented as a computer software program. For example, an embodiment of the present disclosure includes a computer program product including a computer program carried on a non-transitory computer-readable medium, which contains program codes for executing the methods shown in the flowcharts. In such an embodiment, the computer program can be downloaded and installed from the network through the communication device 309, or installed from the storage device 308, or installed from the ROM 302. When the computer program is executed by the processing device 301, the above functions defined in the methods of the embodiments of the present disclosure can be implemented.

The names of the messages or information exchanged between multiple devices in the embodiments of the present disclosure are only used for illustrative purposes and are not used to limit the scope of these messages or information.

The electronic device provided by the embodiment of the present disclosure and the interface interaction method provided by the above embodiment belong to the same inventive concept, the technical details not fully described in this embodiment can be referred to the above embodiment, and this embodiment has the same beneficial effects as the above embodiment.

An embodiment of the present disclosure provides a computer storage medium on which a computer program is stored, when the program is executed by a processor, the interface interaction method provided by the above embodiment can be implemented.

It should be noted that the computer-readable medium mentioned above in the present disclosure can be a computer-readable signal medium or a computer-readable storage medium or any combination of such two. The computer-readable storage medium can be, for example, but not limited to, an electrical, magnetic, optical, electromagnetic, infrared, or semiconductor system, apparatus or device, or a combination of the above. More specific examples of computer-readable storage media may include, but not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium can be any tangible medium containing or storing a program, which can be used by or in combination with an instruction execution system, apparatus or device. In the present disclosure, a computer-readable signal medium may include a data signal propagated in baseband or as part of a carrier wave, in which computer-readable program codes are carried. This propagated data signal can take many forms, including but not limited to electromagnetic signals, optical signals or any suitable combination of the above. A computer-readable signal medium can also be any computer-readable medium other than a computer-readable storage medium, and can send, propagate or transmit a program for use by or in connection with an instruction execution system, apparatus or device. The program codes contained in the computer-readable medium can be transmitted by any suitable medium, including but not limited to wires, optical cables, RF (radio frequency) and the like, or any suitable combination of the above.

In some embodiments, the electronic devices can communicate with each other by using any currently known or future to-be-developed network protocol such as HTTP (HyperText Transfer Protocol), and can be interconnected with digital data communication in any form or medium (for example, communication network). Examples of communication networks include a local area network ("LAN"), a wide area network ("WAN"), an internet network (for example, Internet) and end-to-end networks (for example, ad hoc end-to-end networks), as well as any currently known or future to-be-developed networks.

The computer-readable medium may be included in the above electronic device; or it can exist alone without being assembled into the electronic device.

The computer-readable medium carries one or more programs, and when the one or more programs are executed by the electronic device, the electronic device is caused to: receive a drag-and-drop interaction operation, wherein a drag-and-drop object of the drag-and-drop interaction operation is presented on a displayed interactive interface; when there is a valid drag-and-drop response strategy in a pre-constructed drag-and-drop response strategy set for the drag-and-drop interaction operation, execute a response logic in the valid drag-and-drop response strategy and obtaining an execution result, wherein the drag-and-drop response strategies in the drag-and-drop response strategy set are orthogonal to each other; when the execution result is valid, display the drag-and-drop interaction result with respect to the drag-and-drop object on the interactive interface.

Computer program codes for performing the operations of the present disclosure may be written in one or more programming languages or their combinations, including but not limited to object-oriented programming languages, such as Java, Smalltalk, C++, and conventional procedural programming languages, such as "C" language or similar programming languages. The program codes can be completely executed on the user's computer, partially executed on the user's computer, executed as an independent software package, partially executed on the user's computer and partially executed on a remote computer, or completely executed on a remote computer or server. In the case involving a remote computer, the remote computer may be connected to a user computer through any kind of network, including a local area network (LAN) or a wide area network (WAN), or may be connected to an external computer (for example, through the Internet using an Internet service provider).

The flowcharts and block diagrams in the drawings illustrate the architectures, functions and operations of possible implementations of systems, methods and computer program products according to various embodiments of the present disclosure. In this regard, each block in the flowchart or block diagram may represent a module, a program clip, or a part of code that contains one or more executable instructions for implementing specified logical functions. It should also be noted that in some alternative implementations, the functions noted in the blocks may occur in a different order than those noted in the drawings. For example, two blocks shown in succession may actually be executed substantially in parallel, and they may sometimes be executed in the reverse order, depending on the functions involved. It should also be noted that each block in the block diagrams and/or flowcharts, and combinations of blocks in the block diagrams and/or flowcharts, can be implemented by a dedicated hardware-based system that performs specified functions or operations, or by a combination of dedicated hardware and computer instructions.

The modules involved in the embodiments described in the present disclosure can be realized by software or hardware. Among them, the name of the module does not constitute the limitation of the module itself in some cases. For example, the first acquisition unit may also be described as a "unit for acquiring at least two Internet Protocol addresses".

The functions described above herein may be at least partially performed by one or more hardware logic components. For example, without limitation, exemplary types of hardware logic components that can be used may include Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine-readable medium may be a tangible medium that may contain or store a program for use by or in connection with an instruction execution system, apparatus or device. The machine-readable medium may be a machine-readable signal medium or a machine-readable storage medium. A machine-readable medium may include, but is not limited to, an electronic, magnetic, optical, electromagnetic, infrared, or semiconductor system, device or equipment, or any suitable combination of the above. More specific examples of the machine-readable storage medium may include an electrical connection based on one or more lines, a portable computer disk, a hard disk, a random-access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

The present disclosure may be embodied in any form described herein, including but not limited to the illustrative examples listed below, which describe the structure, features, and functions of some portions of the present invention. Nevertheless, it will be understood that various modifications may be made without departing from the spirit and scope of the disclosure.

According to one or more embodiments of the present disclosure, [Example 1] provides an interface interaction method, which may include:
receiving a drag-and-drop interaction operation, wherein a drag-and-drop object of the drag-and-drop interaction operation is presented on a displayed interactive interface;
when there is a valid drag-and-drop response strategy in a pre-constructed drag-and-drop response strategy set for the drag-and-drop interaction operation, executing a response logic in the valid drag-and-drop response strategy and obtaining an execution result, wherein the drag-and-drop response strategies in the drag-and-drop response strategy set are orthogonal to each other;
when the execution result is valid, displaying the drag-and-drop interaction result with respect to the drag-and-drop object on the interactive interface.

According to one or more embodiments of the present disclosure, [Example 2] provides an interface interaction method, which may also include:
obtaining drag-and-drop interaction data determined from the drag-and-drop interaction operation, and form effectiveness judgment information according to the drag-and-drop interaction data;
determining a valid drag-and-drop response strategy from the drag-and-drop response strategy set according to the effectiveness judgment information.

According to one or more embodiments of the present disclosure, [Example 3] provides an interface interaction method, in the method, the step of the determining drag-and-drop interaction data may include:
extracting drag-and-drop input data corresponding to the drag-and-drop interaction operation;
encapsulating the drag-and-drop input data in an input data format defined by a preset drag-and-drop interaction paradigm to form the drag-and-drop interaction data.

According to one or more embodiments of the present disclosure, [Example 4] provides an interface interaction method, wherein the method can further optimize the step of determining a valid drag-and-drop response strategy from the drag-and-drop response strategy set according to the effectiveness judgment information, specifically including:
acquiring a drag-and-drop response strategy included in the drag-and-drop response strategy set, wherein the drag-and-drop response strategy includes a response effectiveness judgment logic defined according to a preset drag-and-drop interaction paradigm;
operating the response effectiveness judgment logic by using the effectiveness judgment information as input data of the response effectiveness judgment logic, and acquiring an operation return value of the response effectiveness judgment logic;
if there is a target operation return value that satisfies a response valid tag value, then determining a drag-and-drop response strategy corresponding to the target operation return value as the valid drag-and-drop response strategy, otherwise, determining there is no valid drag-and-drop response strategy in the drag-and-drop response strategy set.

According to one or more embodiments of the present disclosure, [Example 5] provides an interface interaction method, which may also include:
when there is no valid drag-and-drop response strategy in the drag-and-drop response strategy set for the drag-and-drop interaction operation, canceling response to the drag-and-drop interaction operation, keeping a display state of the drag-and-drop object in the interactive interface unchanged, and/or displaying an interface prompt indicating that the drag-and-drop interaction operation is invalid.

According to one or more embodiments of the present disclosure, [Example 6] provides an interface interaction method, which may also include:
when it is judged that the execution result is invalid, keeping the display state of the drag-and-drop object on the interactive interface unchanged, and/or displaying an interface prompt indicating that the execution result of the drag-and-drop interaction operation is invalid.

According to one or more embodiments of the present disclosure, [Example 7] provides an interface interaction method, which may also include:
when the response to the drag-and-drop behavior event corresponding to the drag-and-drop object is completed according to the response logic, generating an execution return value representing whether the execution is normal or not, to constitute an execution result;
determining that the execution result is valid if the execution return value indicates that the execution is normal; otherwise, determining that the execution result is invalid;
wherein, the execution return value is generated after the response to the drag-and-drop behavior event corresponding to the drag-and-drop object is completed according to the response logic.

According to one or more embodiments of the present disclosure, [Example 8] provides an interface interaction apparatus, which may also include:
a receiving module, configured to receive a drag-and-drop interaction operation, wherein a drag-and-drop object of the drag-and-drop interaction operation is presented on a displayed interactive interface;
an execution module, configured to, when there is a valid drag-and-drop response strategy in a pre-constructed drag-and-drop response strategy set for the drag-and-drop interaction operation, execute a response logic in the valid drag-and-drop response strategy and obtain an execution result, wherein the drag-and-drop response strategies in the drag-and-drop response strategy set are orthogonal to each other;
a display module, configured to, when the execution result is valid, display the drag-and-drop interaction result with respect to the drag-and-drop object on the interactive interface.

According to one or more embodiments of the present disclosure, [Example 9] provides an electronic device, including:
one or more processors;
a memory for storing one or more programs,
wherein the one or more programs, when executed by the one or more processors, cause the one or more processors to perform the interface interaction method according to any of [Example 1] to [Example 7] of the present disclosure.

According to one or more embodiments of the present disclosure, [Example 10] provides a computer readable storage medium which stores a computer program thereon, wherein the computer program, when executed by a computer processor, cause implementation of the interface interaction method according to any of [Example 1] to [Example 7] of the present disclosure.

According to one or more embodiments of the present disclosure, [Example 11] provides a computer program product comprising instructions which, when executed by a processor, causes implementation of the interface interaction method according to any of [Example 1] to [Example 7] of the present disclosure.

According to one or more embodiments of the present disclosure, [Example 12] provides a computer program comprising program codes which, when executed by a processor, cause implementation of the interface interaction method according to any of [Example 1] to [Example 7] of the present disclosure.

The above description is directed to only preferred embodiments of the present disclosure and an illustration of the technical principles used. Those skilled in the art should understand that the scope of disclosure involved in the present disclosure is not limited to the technical solutions formed by a specific combination of the above-mentioned technical features, but should also cover other technical solutions formed by any combination of the above-mentioned technical features or their equivalent features without departing from the above-mentioned disclosure concepts, for example, the above-mentioned features are replaced with the technical features with similar functions disclosed in this disclosure (but not limited to) to form a technical solution.

Further, while operations are depicted in a particular order, this should not be understood as requiring that such operations be performed in the particular order shown or in a sequential order. Under certain circumstances, multitasking and parallel processing may be advantageous. Likewise, while the above discussion includes several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable sub combination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. An interface interaction method, comprising:
receiving a drag-and-drop interaction operation, wherein a drag-and-drop object of the drag-and-drop interaction operation is presented on a displayed interactive interface;
when there is a valid drag-and-drop response strategy in a pre-constructed drag-and-drop response strategy set for the drag-and-drop interaction operation, executing a response logic in the valid drag-and-drop response strategy and obtaining an execution result, wherein the drag-and-drop response strategies in the drag-and-drop response strategy set are orthogonal to each other;
when the execution result is valid, displaying the drag-and-drop interaction result with respect to the drag-and-drop object on the interactive interface.

2. The method of claim 1, further comprising:
obtaining drag-and-drop interaction data determined from the drag-and-drop interaction operation, and form effectiveness judgment information according to the drag-and-drop interaction data;
determining a valid drag-and-drop response strategy from the drag-and-drop response strategy set according to the effectiveness judgment information.

3. The method of claim 2, wherein the determination of drag-and-drop interaction data comprises:
extracting drag-and-drop input data corresponding to the drag-and-drop interaction operation;
encapsulating the drag-and-drop input data in an input data format defined by a preset drag-and-drop interaction paradigm to form the drag-and-drop interaction data.

4. The method of claim 2, wherein the determining a valid drag-and-drop response strategy from the drag-and-drop response strategy set according to the effectiveness judgment information, comprising:
acquiring a drag-and-drop response strategy included in the drag-and-drop response strategy set, wherein the drag-and-drop response strategy includes a response effectiveness judgment logic defined according to a preset drag-and-drop interaction paradigm;
operating the response effectiveness judgment logic by using the effectiveness judgment information as input data of the response effectiveness judgment logic, and acquiring an operation return value of the response effectiveness judgment logic;
if there is a target operation return value that satisfies a response valid tag value, then determining a drag-and-drop response strategy corresponding to the target operation return value as the valid drag-and-drop response strategy, otherwise, determining there is no valid drag-and-drop response strategy in the drag-and-drop response strategy set.

5. The method of any one of claims 1-4, further comprising:
when there is no valid drag-and-drop response strategy in the drag-and-drop response strategy set for the drag-and-drop interaction operation, canceling response to the drag-and-drop interaction operation, keeping a display state of the drag-and-drop object in the interactive interface unchanged, and/or displaying an interface prompt indicating that the drag-and-drop interaction operation is invalid.

6. The method of any one of claims 1-5, further comprising:
When it is judged that the execution result is invalid, keeping the display state of the drag-and-drop object on the interactive interface unchanged, and/or displaying an interface prompt indicating that the execution result of the drag-and-drop interaction operation is invalid.

7. The method of any one of claims 1-6, further comprising:
when the response to the drag-and-drop behavior event corresponding to the drag-and-drop object is completed according to the response logic, generating an execution return value representing whether the execution is normal or not, to constitute an execution result;
determining that the execution result is valid if the execution return value indicates that the execution is normal; otherwise, determining that the execution result is invalid;
wherein, the execution return value is generated after the response to the drag-and-drop behavior event corresponding to the drag-and-drop object is completed according to the response logic.

8. An interface interaction apparatus, comprising:
a receiving module, configured to receive a drag-and-drop interaction operation, wherein a drag-and-drop object of the drag-and-drop interaction operation is presented on a displayed interactive interface;
an execution module, configured to, when there is a valid drag-and-drop response strategy in a pre-constructed drag-and-drop response strategy set for the drag-and-drop interaction operation, execute a response logic in the valid drag-and-drop response strategy and obtain an execution result, wherein the drag-and-drop response strategies in the drag-and-drop response strategy set are orthogonal to each other;
a display module, configured to, when the execution result is valid, display the drag-and-drop interaction result with respect to the drag-and-drop object on the interactive interface.

9. The apparatus of claim 8, further comprising:
an information generation module, configured to obtain drag-and-drop interaction data determined from the drag-and-drop interaction operation, and form effectiveness judgment information according to the drag-and-drop interaction data;
an effectiveness judgment module, configured to determine a valid drag-and-drop response strategy from the drag-and-drop response strategy set according to the effectiveness judgment information.

10. The apparatus of claim 9, further comprising:
an interaction data determination module, configured to extract drag-and-drop input data corresponding to the drag-and-drop interaction operation; encapsulate the drag-and-drop input data in an input data format defined by a preset drag-and-drop interaction paradigm to form the drag-and-drop interaction data.

11. The apparatus of claim 9, wherein, the effectiveness judgment module is configured to:
acquire a drag-and-drop response strategy included in the drag-and-drop response strategy set, wherein the drag-and-drop response strategy includes a response effectiveness judgment logic defined according to a preset drag-and-drop interaction paradigm;
operate the response effectiveness judgment logic by using the effectiveness judgment information as input data of the response effectiveness judgment logic, and acquire an operation return value of the response effectiveness judgment logic;
if there is a target operation return value that satisfies a response valid tag value, then determine a drag-and-drop response strategy corresponding to the target operation return value as the valid drag-and-drop response strategy, otherwise, determine there is no valid drag-and-drop response strategy in the drag-and-drop response strategy set.

12. The apparatus of any one of claims 8-11, further comprising a first invalid processing module, configured to:
when there is no valid drag-and-drop response strategy in the drag-and-drop response strategy set for the drag-and-drop interaction operation, cancel response to the drag-and-drop interaction operation, keep a display state of the drag-and-drop object in the interactive interface unchanged, and/or display an interface prompt indicating that the drag-and-drop interaction operation is invalid.

13. The apparatus of any one of claims 8-12, further comprising a second invalid processing module, configured to:
When it is judged that the execution result is invalid, keep the display state of the drag-and-drop object on the interactive interface unchanged, and/or display an interface prompt indicating that the execution result of the drag-and-drop interaction operation is invalid.

14. The apparatus of any one of claims 8-13, further comprising:
a value generation module, configured to, when the response to the drag-and-drop behavior event corresponding to the drag-and-drop object is completed according to the response logic, generate an execution return value representing whether the execution is normal or not, to constitute an execution result;
a result effectiveness judgment module, configured to determine that the execution result is valid if the execution return value indicates that the execution is normal; otherwise, determine that the execution result is invalid;
wherein, the execution return value is generated after the response to the drag-and-drop behavior event corresponding to the drag-and-drop object is completed according to the response logic.

15. An electronic device, comprising:
one or more processor, and
a memory for storing one or more programs,
wherein the one or more programs, when executed by the one or more processor, cause the one or more processor to perform the method of any one of claims 1-7.

16. A computer-readable storage medium storing a computer program thereon, wherein the computer program, when executed by the processor, cause implementation of the method of any one of claims 1-7.

17. A computer program product comprising instructions which, when executed by a processor, causes implementation of the method of any one of claims 1-7.

18. A computer program comprising program codes which, when executed by a processor, cause implementation of the method of any one of claims 1-7.
